# EUROPEAN PATENT APPLICATION

(11) **EP 4 704 435 A1**
(43) Date of publication of application: **04.03.2026**
(21) Application number: 24796765.6
(22) Date of filing: 08.04.2024
(51) Int. Cl.: H04N 23/63, G03B 17/20, G03B 19/07, G06F 3/0481

(54) **IMAGING DEVICE, DISPLAY CONTROL METHOD, AND PROGRAM**

(30) Priority: 28.04.2023 JP 2023074361
(71) Applicant: Sony Group Corporation, Tokyo 108-0075 (JP)
(72) Inventor: ITAGAKI, Shusei, Tokyo 108-0075 (JP)
(74) Representative: D Young & Co LLP
(86) International application number: PCT/JP2024/014284
(87) International publication number: WO 2024/225009

(57) **Abstract**

An imaging apparatus includes a display provided on a first surface of a housing, a lens that is for image capturing and is provided on a second surface of the housing, the second surface having a relationship of front and back surfaces with the first surface, and a control unit that performs control for displaying an indicator that indicates the lens at a position on the display, where the lens is projected from the second surface to the first surface.

## Description

### TECHNICAL FIELD

The present technology relates to an imaging apparatus, a display control method, and a program, and particularly relates to a technical field of a user interface of the imaging apparatus.

### BACKGROUND ART

In recent years, an information processing apparatus such as a smartphone or a tablet terminal is generally equipped with a camera function.

Patent Document 1 below discloses an example of a screen when a camera application is activated in a smartphone.

### CITATION LIST

### PATENT DOCUMENT

Patent Document 1: WO2020/016966

### SUMMARY OF THE INVENTION

### PROBLEMS TO BE SOLVED BY THE INVENTION

Considering a case where an image is shot by using a camera function of a smartphone, a user may shoot an image while visually recognizing a display surface side of a smartphone housing and pointing a lens provided on a back surface side thereof at a subject. Because a captured monitor image (through image) is displayed on the display, the user determines a composition or the like by viewing the monitor image and operates a shutter.

However, in a case of a general-purpose information processing apparatus such as a smartphone, unlike a normal camera (a dedicated imaging machine), the user tends not to be clearly aware of a position of the lens. Therefore, there is a problem that it is difficult to capture an image of a composition intended by the user.

Therefore, the present disclosure proposes a technique that enables a user to easily recognize a lens position.

### SOLUTIONS TO PROBLEMS

An imaging apparatus according to the present technology includes a display provided on a first surface of a housing, a lens that is for image capturing and is provided on a second surface of the housing, the second surface having a relationship of front and back surfaces with the first surface, and a control unit that performs control for displaying an indicator that indicates the lens at a position on the display, where the lens is projected from the second surface to the first surface.

For example, on a display of an imaging apparatus such as a smartphone with which it is difficult to be aware of a lens position, the lens position on a back surface of the imaging apparatus is presented.

### BRIEF DESCRIPTION OF DRAWINGS

Fig. 1 is an explanatory diagram of a display example of an imaging apparatus according to an embodiment according to the present technology.
Fig. 2 is an explanatory diagram of a display position of a lens indicator according to the embodiment.
Fig. 3 is an explanatory diagram illustrating that a composition changes depending on a lens used.
Fig. 4 is an explanatory diagram of a display position of the lens indicator according to the embodiment.
Fig. 5 is a block diagram of the imaging apparatus according to the embodiment.
Fig. 6 is a flowchart of lens indicator display control according to the embodiment.
Fig. 7 is a flowchart of lens indicator display control according to the embodiment.
Fig. 8 is a flowchart of lens indicator display control according to the embodiment.
Fig. 9 is an explanatory diagram of an operator of a specifying operation according to the embodiment.
Fig. 10 is an explanatory diagram of a lens indicator display example according to the embodiment.
Fig. 11 is a flowchart of lens indicator display control according to the embodiment.
Fig. 12 is an explanatory diagram of an example in which lens indicator display according to the embodiment is performed.
Fig. 13 is a flowchart of lens indicator display control according to the embodiment.
Fig. 14 is a flowchart of lens indicator display control according to the embodiment.
Fig. 15 is an explanatory diagram of a lens indicator display example according to the embodiment.
Fig. 16 is an explanatory diagram of a lens indicator to which magnification display according to the embodiment is added.
Fig. 17 is an explanatory diagram of a slide operation on the lens indicator according to the embodiment.
Fig. 18 is a flowchart of an example of processing for operation of the lens indicator according to the embodiment.
Fig. 19 is an explanatory diagram of an operation mode by display in which the lens indicator and a slider are combined according to the embodiment.
Fig. 20 is an explanatory diagram of a lens indicator display example according to the embodiment.
Fig. 21 is a flowchart of processing of changing a display mode of the lens indicator according to the embodiment.
Fig. 22 is an explanatory diagram of a background blurring function according to the embodiment.

### MODE FOR CARRYING OUT THE INVENTION

Hereinafter, an embodiment will be described in the following order.
<1. Display of lens indicator>
<2. Configuration of imaging apparatus>
<3. Lens indicator display control processing>
<4. Various examples of display and operation>
<5. Conclusion and modifications>

Note that, in the present disclosure, an "image" refers to both a still image and a moving image. For example, image capturing includes both still image capturing and moving image capturing.

### <1. Display of lens indicator>

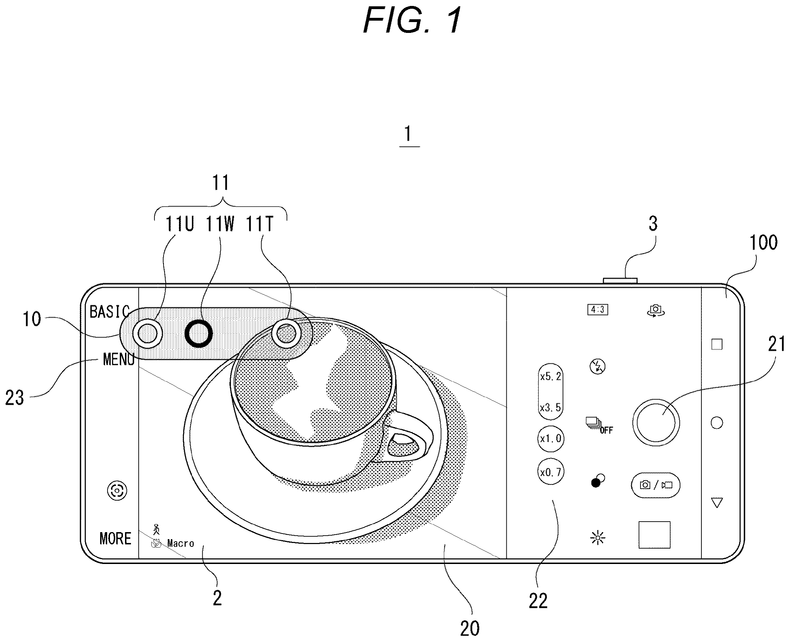

Fig. 1 illustrates a display example of a first surface 100 of a housing of an imaging apparatus 1 according to an embodiment.

The embodiment will be described taking as an example a case where shooting is performed mainly by activating a camera application in a smartphone. Therefore, the imaging apparatus 1 according to the embodiment is assumed to be a smartphone that is a general-purpose information processing apparatus. The smartphone functions as the imaging apparatus 1 by the camera application on the smartphone being activated.

Therefore, the housing of the imaging apparatus 1 according to the embodiment is a housing of the smartphone, and is, for example, a flat substantially rectangular parallelepiped housing. A display 2 is formed on the first surface 100 of the housing, and various images are displayed by an application program that is activated.

Fig. 1 illustrates a display example in a case where the camera application is activated. A monitor region 20 is provided on a part of the display 2, and a monitor image (through image) on a subject side is displayed thereon. Furthermore, a record button 21 for a still image or moving image, zoom magnification buttons 22, a menu button 23, and other various buttons and icons are displayed.

Note that there is also a case where the monitor image is displayed on an entire screen that is set as the monitor region 20 according to a setting value of a captured image size (aspect ratio), and the above-described record button 21 and the like, a lens indicator 10 to be described later, and other icons may be superimposed and displayed on the monitor image.

A user can perform operation of capturing a still image or starting/ending recording of a moving image by using the record button 21.

Note that a shutter button 3 is provided on a side surface of the housing. The user can also capture a still image or the like by using the shutter button 3.

Furthermore, the user can perform operation of changing the zoom magnification by tapping or sliding the zoom magnification buttons 22. The zoom magnification operation also includes a lens switching operation. For example, by selecting a button of "x 0.7", an ultra-wide lens 6U is selected. Furthermore, for example, the zoom magnification is changed by sliding the button of "x 0.7" or "x 3.5 x 5.2". In some cases, lenses are automatically switched in a middle of sliding.

Although the above is an example of zoom magnification operation, various operation modes using the zoom magnification button 22 are conceivable. For example, icons for magnifications in different granularities, a slider, or the like may be displayed by performing any one of the operations of the zoom magnification buttons 22 to allow the user to designate an arbitrary magnification with a pinch operation or the like on the icons, slider, or the like.

Various operation menus are displayed depending on the menu button 23. The user can perform various settings by using the operation menus. In a case of the present embodiment, it is also possible to set a mode related to the lens indicator 10 described below.

In the imaging apparatus 1 according to the embodiment, the lens indicator 10 is displayed on the display 2.

With position marks 11 (11U, 11W, 11T), the lens indicator 10 indicates actual positions of the lenses provided on a second surface 200, which is a back surface of the first surface 100 on which the display 2 is provided.

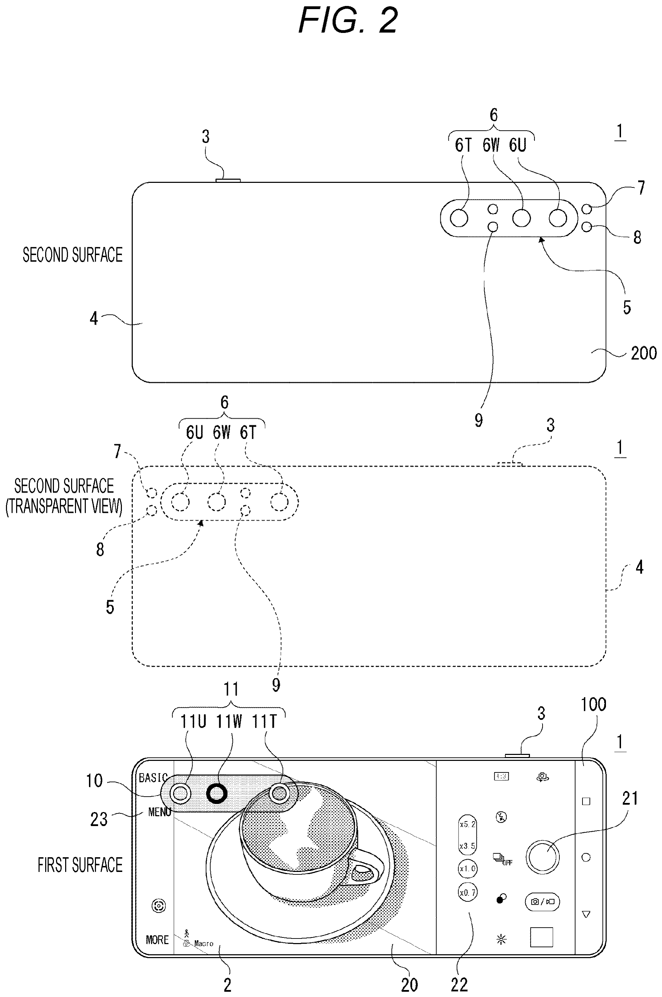

Fig. 2 illustrates the second surface 200, a state in which the second surface 200 is seen through from a side close to the first surface 100, and the first surface 100, such that they can be compared with one another.

The second surface 200 is a rear surface of the smartphone, and a lens unit 5 is disposed on the second surface 200. As an example, the lens unit 5 includes three lenses 6. For example, the ultra-wide lens 6U, a wide lens 6W, and a telelens 6T are included. Furthermore, the lens unit 5 is also provided with a Time Of Flight (TOF) sensor 9 that is at a position between the wide lens 6W and the telelens 6T. As illustrated in the drawing, a light-emitting unit and light-receiving unit of the TOF sensor 9 are exposed.

Furthermore, a flash unit 8 and a photometry unit 7 that performs photometry of ambient light are provided adjacent to the lens unit 5.

In this case, as can be seen in a transparent view of the second surface 200, the lens unit 5 is disposed as in an upper left part of the drawing as viewed from a side close to the display 2.

On the display 2, the lens indicator 10 is displayed corresponding to a position of the lens unit 5, and the position marks 11U, 11W, and 11T are displayed corresponding to the three respective lenses 6. The position mark 11U is displayed at a position where the ultra-wide lens 6U is projected perpendicularly from the second surface 200 to the first surface 100. The position mark 11W is displayed at a position where the wide lens 6W is projected perpendicularly from the second surface 200 to the first surface 100. The position mark 11T is displayed at a position where the telelens 6T is projected perpendicularly from the second surface 200 to the first surface 100.

That is, the lens indicator 10 is displayed at a position on the display 2, where the respective lenses 6 are projected from the second surface 200 to the first surface 100, and the position marks 11 indicate positions of the respective lenses 6 on a back surface of the display 2 being viewed by the user.

That is, the lens indicator 10 is displayed such that the position marks 11 are positioned at positions on the display 2, the positions being directly behind positions at which the respective lenses 6 are disposed.

With the lens indicator 10, the user can recognize a lens position on the back surface.

Furthermore, in examples in Figs. 1 and 2, a display mode of the position mark 11W is an emphasized display so as to be more conspicuous than the position marks 11U and 11T. For example, the position mark 11W is displayed with high luminance or in a specific color. This indicates that the wide lens 6W is currently used for image capturing.

That is, the user can recognize the lens currently being used according to a difference in the display mode of the position marks 11U, 11W, and 11T.

The user can clearly recognize positions of the respective lenses 6, which lens 6 is used, and the like, by which usability is improved when determining the composition, for example.

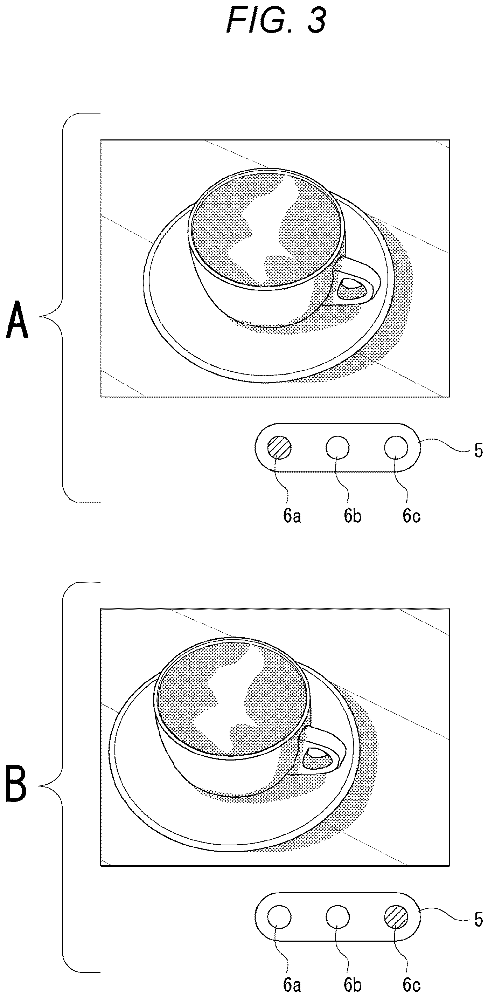

This is useful, for example, in a case where influence of parallax by a lens is large in macro shooting or the like. Figs. 3A and 3B schematically illustrate an example in which lenses 6a, 6b, and 6c are provided in the lens unit 5 and a captured image. Compositions of the captured image are different as illustrated in the drawings between a state where the lens 6a on a left side captures the image as illustrated in Fig. 3A and a state where the lens 6c on a right side captures the image in the same positional relationship as illustrated in Fig. 3B. That is, if the lens position cannot be grasped, a composition intended by the user may not be obtained even if shooting is performed. In other words, it is difficult to determine a positional relationship between the imaging apparatus 1 (smartphone) and a subject.

Furthermore, which lens 6 is used in the macro shooting varies depending on a model and a manufacturer, and it is difficult for the user to know which lens 6 is to be used.

Meanwhile, a position of the lens to be used can be recognized by the lens indicator 10, by which usability for the user is remarkably improved.

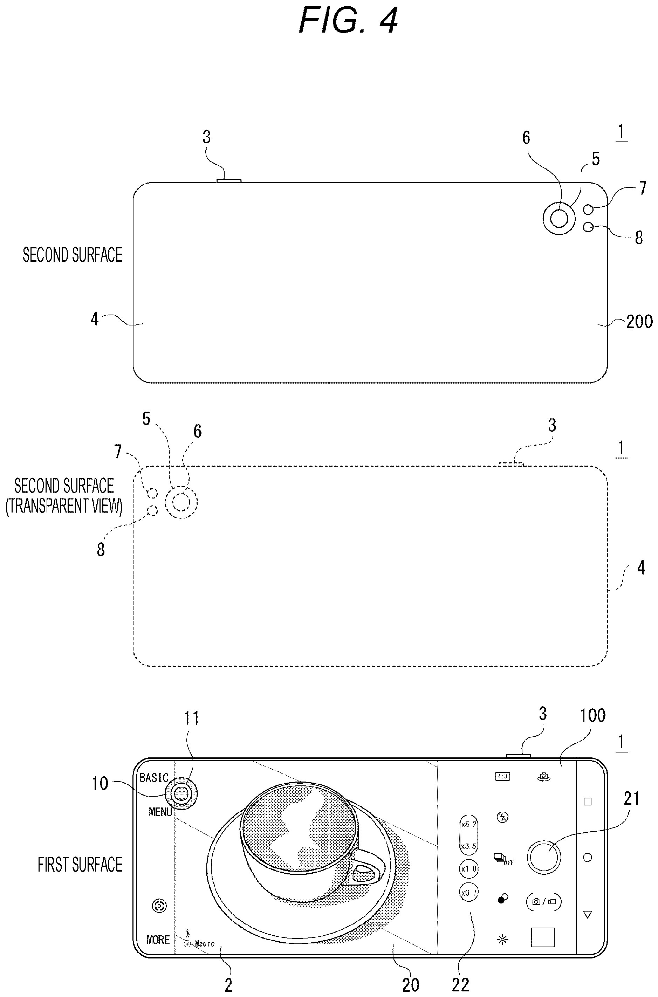

Note that, although Figs. 1 and 2 illustrate an example of a smartphone on which three lenses 6 are mounted, the lens indicator 10 is also useful for a smartphone on which one lens 6 is mounted. For example, Fig. 4 illustrates an example of a smartphone equipped with one lens 6 in a format similar to that in Fig. 2. A lens unit 5 having one lens 6 is disposed on the second surface 200.

Accordingly, the lens indicator 10 and the position mark 11 are displayed at corresponding positions on the first surface 100.

In a case where the smartphone is used as the imaging apparatus 1, if the user is not aware of a position of the lens 6, the composition may not be as desired. Furthermore, a finger may come into contact with a surface of the lens 6. Therefore, even in a case where a plurality of lenses is not mounted, display of the lens indicator 10 is useful.

### <2. Configuration of imaging apparatus>

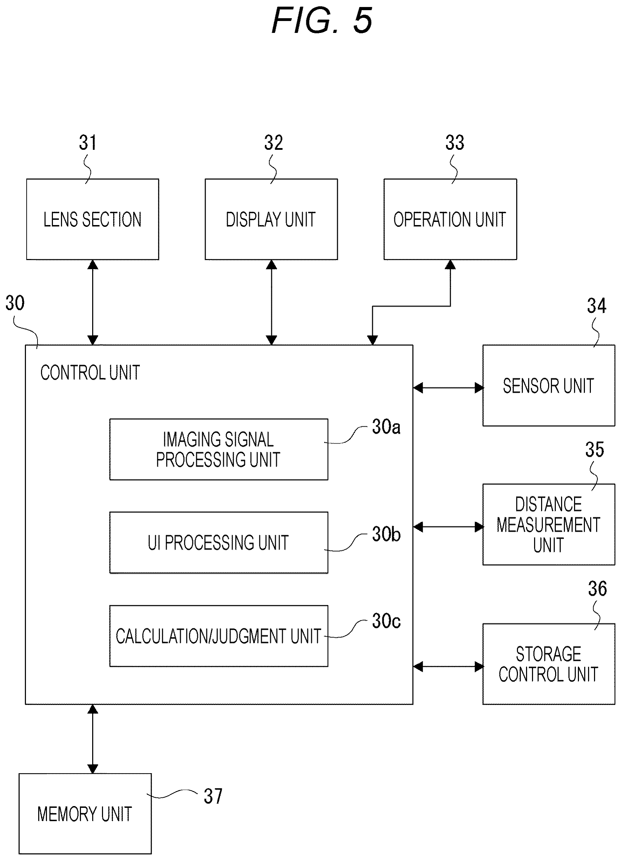

Fig. 5 illustrates a configuration example of the imaging apparatus 1 that displays the lens indicator 10 and the like as described above. The imaging apparatus 1 includes a control unit 30, a lens section 31, a display unit 32, an operation unit 33, a sensor unit 34, a distance measurement unit 35, a storage control unit 36, and a memory unit 37. Note that the configuration in Fig. 5 is merely an example illustrating main parts, and a configuration not illustrated may be included, and it is not necessary to include all the configurations illustrated.

The lens section 31 includes the lens unit 5 described above, an image sensor that receives incident light corresponding to one or a plurality of lenses 6 in the lens unit 5, and a processing circuit for signals photoelectrically converted by the image sensor.

The lens unit 5 in the lens section 31 includes an optical system such as a zoom lens, a focus lens, and a diaphragm mechanism, a drive mechanism of these optical elements, and the like. Note that the above-described "lens 6" collectively refers to an optical system up to the image sensor.

With this optical system, light from the subject is guided and condensed on the image sensor.

The image sensor in the lens section 31 is configured as, for example, a charge coupled device (CCD) type, a complementary metal oxide semiconductor (CMOS) type, or the like. The image sensor performs, for example, correlated double sampling (CDS) processing, automatic gain control (AGC) processing, or the like on an electrical signal obtained by executing photoelectric conversion on received light, and also performs analog/digital (A/D) conversion processing. Then, the captured image signal as digital data is output to the control unit 30.

The display unit 32 includes the above-described display 2 and a display drive circuit thereof, and performs various displays for the user. The display 2 includes a liquid crystal display (LCD) panel, an organic electro-luminescence (EL) panel, or the like.

The display unit 32 executes various displays on a display screen on the basis of an instruction from the control unit 30. For example, the display unit 32 displays the monitor image (through image) at a time of shooting, various icons as the user interface, operators, and the like. That is, display as a graphical user interface (GUI) is executed on the screen.

The operation unit 33 generically represents input devices provided for the user to input various operations. Specifically, the input devices are a physical operator such as the shutter button 3, a touch panel that is provided on the display 2 and detects an operation on an operator (button, icon, slider, or the like) displayed on the display 2, and the like.

An operation by the user is sensed by the operation unit 33, and a signal corresponding to the input operation is transmitted to the control unit 30.

The sensor unit 34 represents various sensors mounted on the imaging apparatus 1.

The sensor unit 34 is equipped with an inertial measurement unit (IMU), for example, and can detect an angular velocity with an angular velocity (gyro) sensor of three axes of pitch, yaw, and roll, for example, and detect acceleration with an acceleration sensor.

Furthermore, as the sensor unit 34, an illuminance sensor included in the photometry unit 7 is mounted.

Each kind of information detected by the sensor unit 34, such as illuminance information, IMU data, for example, is supplied to the control unit 30.

The distance measurement unit 35 includes the light-emitting unit and light-receiving unit included in the TOF sensor 9, and an arithmetic control unit, which controls light emission and performs calculation based on a light reception signal, and performs processing of calculating a distance (depth) to the subject. The calculated distance information is supplied to the control unit 30.

On a recording medium such as a non-volatile memory for example, the storage control unit 36 performs processing of recording an image file (content file) of still image data, moving image data, or the like, attribute information of the image file, a thumbnail image, and the like.

Various actual forms of the storage control unit 36 are conceivable. For example, the storage control unit 36 may be a circuit unit that performs recording/reproducing with respect to a flash memory built in the imaging apparatus 1, or may be a card recording/reproducing circuit that performs recording/reproducing access to a memory card (for example, a portable flash memory) attachable to and detachable from the imaging apparatus 1. Furthermore, the storage control unit 36 may be implemented as a hard disk drive (HDD), a solid state drive (SSD), or the like as an aspect incorporated in the imaging apparatus 1.

The control unit 30 includes a microcomputer (arithmetic processing unit) equipped with a central processing unit (CPU).

The memory unit 37 stores information and the like used by the control unit 30 for processing. The memory unit 37 includes, for example, a read only memory (ROM), a random access memory (RAM), a flash memory, and the like.

The memory unit 37 may be a memory area built in a microcomputer chip serving as the control unit 30 or may include a separate memory chip.

The RAM in the memory unit 37 is used to temporarily store data, programs, and the like as a work area for during various types of data processing performed by the CPU of the control unit 30.

The ROM and the flash memory (non-volatile memory) in the memory unit 37 are used to store an operating system (OS) for the CPU to control each unit, application programs for various operations, various types of setting information, and the like.

The control unit 30 executes a program stored in the ROM, the flash memory, or the like of the memory unit 37 to control the entire imaging apparatus 1.

For example, the control unit 30 performs control for zooming, focusing, aperture adjustment, and the like on the optical system of the lens section 31, control of shutter speed for the image sensor, signal processing on data of the captured image, an imaging operation and recording operation according to operation by the user, operation of reproducing the recorded image file, and the like.

In the drawing, an imaging signal processing unit 30a, a user interface (UI) processing unit 30b, and a calculation/judgment unit 30c are illustrated regarding functions in the control unit 30, the functions being provided by the camera application according to the present embodiment.

On the captured image data captured by the lens section 31 and input, the imaging signal processing unit 30a performs processing such as, for example, RAW correction processing, Y/C development processing, codec processing, and file generation processing. Image data output through the processing by the imaging signal processing unit 30a is stored in the storage medium by the storage control unit 36.

The UI processing unit 30b senses display control of the display unit 32 or operation information by the operation unit 33, and executes processing corresponding thereto. For example, control processing related to display of the monitor region 20, display of various icons and the like, and display of the lens indicator 10 on the display 2 as illustrated in Fig. 1 are performed.

Here, the calculation/judgment unit 30c is illustrated as a function of performing processing of calculation and judgment related to display of the lens indicator 10 and the like.

For example, judgment of execution/non-execution of display of the lens indicator 10, processing of calculating data related to a distance, an attitude, and the like for the judgment, and the like are performed.

### <3. Lens indicator display control processing>

An example of processing related to the lens indicator 10 by the imaging apparatus 1 described above will be described. Each processing example described below is an example of processing executed by the control unit 30 with functions of the UI processing unit 30b and calculation/judgment unit 30c.

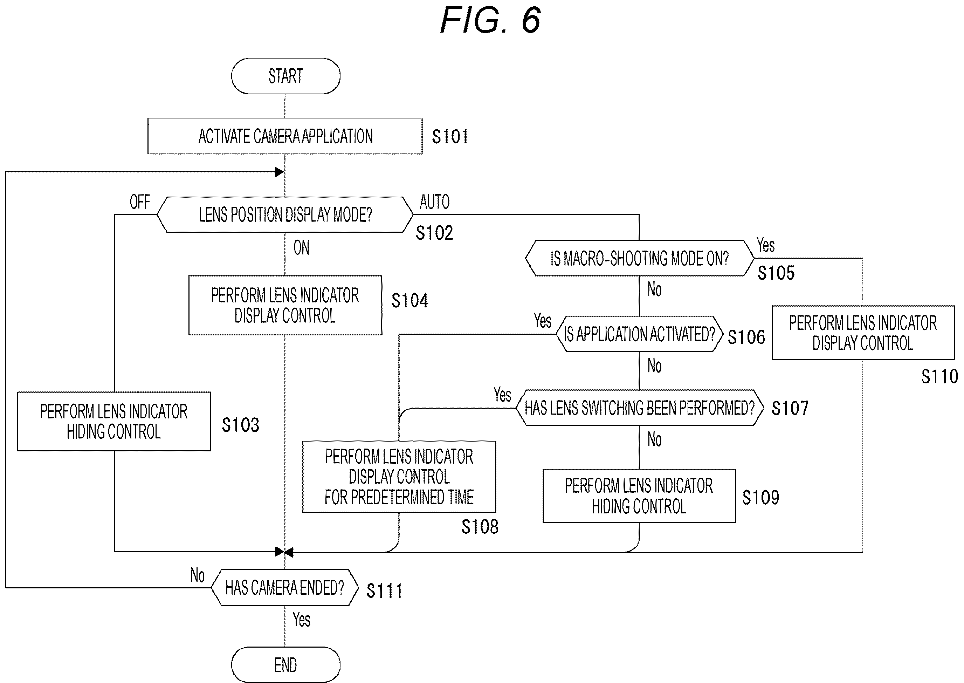

Fig. 6 illustrates an example of processing related to display when the camera application is activated in the smartphone serving as the imaging apparatus 1.

In Step S101, the control unit 30 activates the camera application in response to, for example, an operation by the user.

In Step S102, the control unit 30 checks a lens position display mode. The lens position display mode is, for example, a mode arbitrarily selected and set by the user, and, for example, "ON", "OFF", and "AUTO" can be set.

In this case, "ON" is a mode in which the lens indicator 10 is displayed at all times, "OFF" is a mode in which the lens indicator 10 is hidden at all times, and "AUTO" is a mode in which display and hiding of the lens indicator 10 are controlled according to judgment by the control unit 30.

Note that it is assumed that the user can select the lens position display mode on a menu screen or the like displayed by operating the menu button 23. Alternatively, a mode selection switch may be displayed on the screen so that the user can make a selection.

In a case where the lens position display mode is OFF, the control unit 30 proceeds to Step S103 and sets the lens indicator 10 to a hidden state.

In Step S111, end of the camera application is judged. For example, in a case where the user turns off the smartphone or transitions to another application, it is judged that the camera is ended.

In a case where it is not judged that the camera is ended, the processing returns to Step S102. Therefore, when the lens position display mode is OFF, unless the lens position display mode is switched, the lens indicator 10 continues to be hidden in the processing in Step S103.

A user who thinks that lens indicator 10 is unnecessary is only required to leave the lens position display mode OFF.

In a case where the lens position display mode is ON, the control unit 30 proceeds to Step S104 and sets the lens indicator 10 to a display state. In a case where a plurality of lenses 6 is mounted, in the lens indicator 10, the position marks 11 are displayed corresponding to the plurality of lenses 6, and the display mode of the position mark 11 corresponding to a lens currently used for image capturing (hereinafter referred to as a "lens used") is set so that the lens used can be recognized. For example, the position mark 11 corresponding to the lens used is displayed in an emphasized manner. The emphasized display can be performed by a difference in color or luminance. For example, the position mark 11 of the lens used is red, and the position marks 11 of other lenses are black. Alternatively, the position mark 11 of the lens used is displayed with high luminance, and the position marks 11 of the other lenses are displayed with low luminance. Moreover, as the emphasized display, the position mark 11 of the lens used may be lower in transmittance or larger in size than the position marks 11 of the other lenses.

Then, the control unit 30 proceeds to Step S111, and returns to Step S102 if the camera application is not ended. Therefore, when the lens position display mode is ON, unless the lens position display mode is switched, the lens indicator 10 continues to be displayed. A user who thinks that the lens indicator 10 is necessary at all times is only required to leave the lens position display mode ON.

In a case where the lens position display mode is AUTO, the control unit 30 automatically performs control for displaying/hiding the lens indicator 10.

The lens indicator 10 is suitable for recognizing the lens position, but, if displayed at all times, may interfere with visual recognition of a subject image in the monitor region 20. Therefore, display is performed when necessary.

First, in Step S105, the control unit 30 judges whether or not a macro-shooting mode is currently ON.

In a case where the macro-shooting mode is ON, the control unit 30 performs in Step S110 control for displaying the lens indicator 10. Furthermore, the lens used in the macro shooting is displayed in an emphasized manner.

Therefore, when the macro-shooting mode is ON, the lens indicator 10 is displayed at all times.

In a case of macro shooting, as described with reference to Fig. 3, it is difficult to adjust the composition unless a user is aware of the lens position. Therefore, the lens indicator 10 is displayed so that the user can recognize the lens position.

In a case where the macro-shooting mode is OFF, the control unit 30 proceeds to Step S106 and judges whether or not the camera application is currently activated.

When the camera application is activated, that is, when it is a judgment timing of first Step S106 after activation, the control unit 30 proceeds to Step S108 and performs control for displaying the lens indicator 10 for a predetermined time. For example, control for displaying the lens indicator 10 is started for several seconds. In this case also, the lens used is displayed in an emphasized manner.

Then, the control unit 30 proceeds to Step S111. In this case, the control unit 30 performs processing of hiding the lens indicator 10 at a time point when the predetermined time has elapsed from start of the display.

Therefore, when the camera application is activated and the screen as illustrated in Fig. 1 is displayed, the lens indicator 10 is displayed for initial several seconds, and thus the user can recognize the lens position first. Thereafter, the display is hidden, so that visibility of the display of the monitor region 20 or the like is not reduced.

When the camera application is not activated, the control unit 30 checks in Step S107 whether or not lens switching has been performed. For example, whether or not it is immediately after the lens 6 to be used is switched and a timing to first make the judgment in Step S107 is checked.

In a case where it is immediately after the lens switching is performed, the control unit 30 proceeds to Step S108 and performs control for displaying the lens indicator 10 for the predetermined time.

Therefore, the lens indicator 10 is automatically displayed immediately after the lens switching is performed, and the user can recognize the lens to be used after the switching.

Note that the lens switching here preferably includes not only a case where the lens 6 is switched by a manual operation by the user, but also a case where the lens is automatically switched by a zoom operation by the user.

When the macro-shooting mode is OFF and not at the time of activation or at the time of lens switching, the control unit 30 proceeds to Step S109 and sets the lens indicator 10 to the hidden state.

With the above processing in Fig. 6, display/hiding of the lens indicator 10 is controlled in a state desired by the user.

Note that Fig. 6 is merely an example.

For example, a lens position display mode setting may not be provided, and the lens indicator 10 may be displayed at all times, or a button for switching the display/hiding may be displayed on the display 2, and the display/hiding of the lens indicator 10 may be switched according to an operation by the user.

Furthermore, an "OFF" mode and an "AUTO" mode may be selectable without providing an "ON" mode.

Alternatively, the mode selection may not be possible, and the processing described as in the "AUTO" mode may be performed at all times.

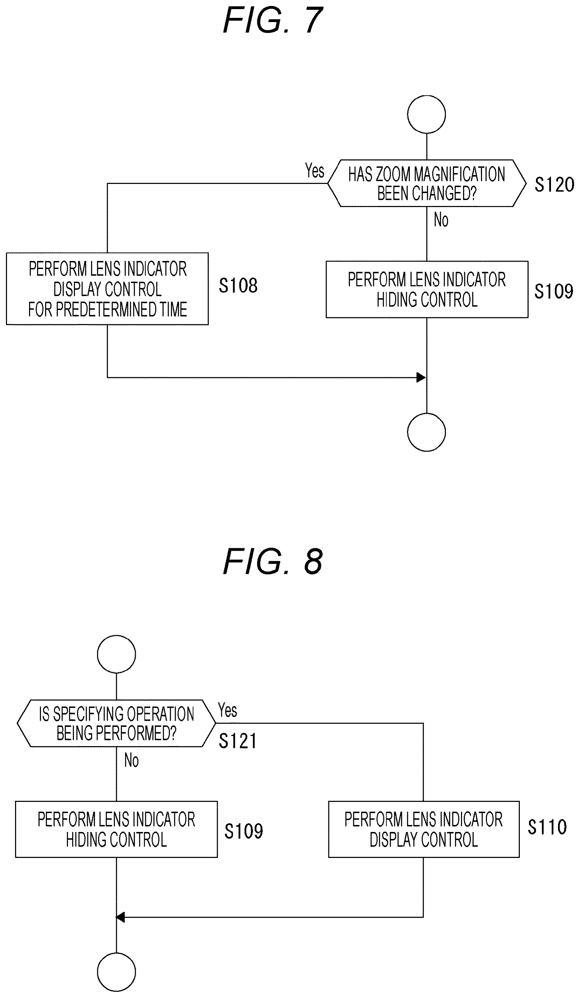

Furthermore, as examples of a condition of judging the display/hiding control of the lens indicator 10 in a case corresponding to the "AUTO" mode, Fig. 6 illustrates whether or not the macro-shooting mode is ON, whether or not the camera application is activated, and whether or not the lens switching has been performed. However, various other conditions are conceivable, and description thereof will be made below. The processing described below with reference to Figs. 7, 8, 11, 13, and 14 can be incorporated into Fig. 6 as processing for a case of the "AUTO" mode. Any conditions may be combined. It is only required that processing in the "AUTO" mode is achieved by at least one judgment condition among the judgment conditions described with reference to Fig. 6 or below.

Fig. 7 illustrates an example in which whether or not there has been a change in zoom magnification is used as a judgment condition.

In Step S120, the control unit 30 judges whether or not the zoom magnification has been changed. For example, in a case where it is sensed that the zoom magnification is changed by a zoom operation or lens selection operation by the user, the control unit 30 proceeds to Step S108 and performs control for displaying the lens indicator 10 for the predetermined time.

Meanwhile, when the zoom magnification change has not been performed, the control unit 30 performs in Step S109 processing of hiding the lens indicator 10.

Note that, in Fig. 7, the control unit 30 proceeds to Step S109 if there is no change in zoom magnification. However, in a case of combination with another judgment condition, the control unit 30 proceeds to Step S109 through judgment of the hiding all based on each judgment condition. A similar applies to Figs. 8, 11, 13, and 14.

Fig. 8 illustrates an example in which whether or not the user performs a specifying operation is used as the judgment condition.

In Step S121, the control unit 30 judges whether or not the specifying operation is being performed.

Then, if the specifying operation is being performed, the control unit 30 proceeds to Step S110 and performs control for displaying the lens indicator 10.

Meanwhile, if the specifying operation is not being performed, the control unit 30 performs in Step S109 the processing of hiding the lens indicator 10.

Examples of the specifying operation in this case include a half-pressing operation of the shutter button 3. The half-pressing of the shutter button 3 is an operation with which the user determines a subject and activates autofocus. This is also a timing at which the user adjusts the composition. Therefore, by displaying the lens indicator 10 at a time of the half-pressing, the user can easily adjust the composition.

Furthermore, in this sense, as the specifying operation, an operation that triggers the autofocus other than the half-pressing of the shutter button 3 is also conceivable.

For example, in a case where there is provided a function of activating the autofocus on the subject by the user touching the subject image in the monitor region 20, the touch operation on the subject is regarded as the specifying operation, and the lens indicator 10 is displayed. Moreover, a similar applies to a case where an autofocus button or the like is provided and the operation is performed.

Note that, given that such a touch operation as a trigger of the autofocus is not a continuous operation but a short-time operation, the control unit 30 may proceed to Step S108 illustrated in Figs. 6 and 7 instead of Step S110, and the lens indicator 10 may be controlled to be displayed for the predetermined time.

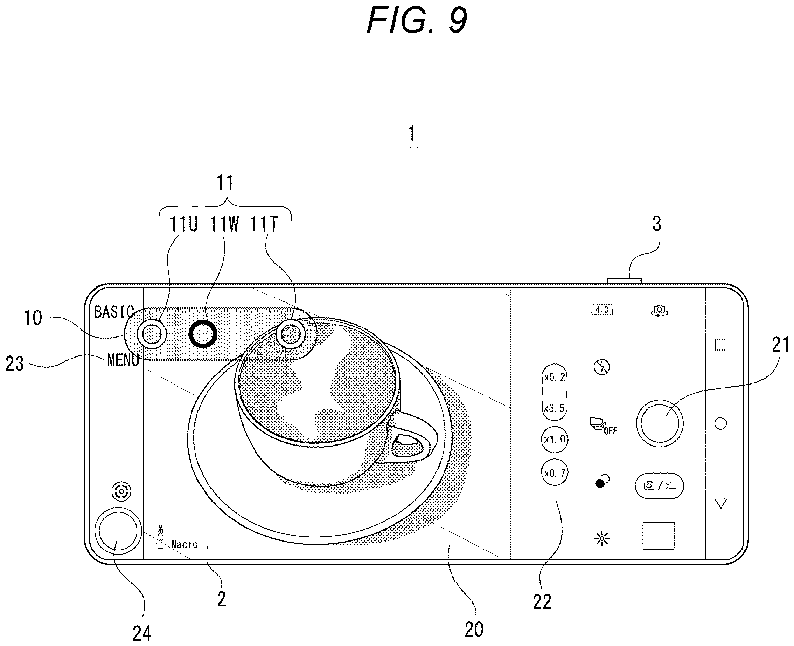

Furthermore, the specifying operation may be an operation of a dedicated button or the like. For example, as illustrated in Fig. 9, an indicator display button 24 is displayed on the display 2. While the user presses the indicator display button 24, the control unit 30 performs in Step S110 control for displaying the lens indicator 10.

Note that, in response to the indicator display button 24 being tapped once, the control unit 30 may proceed to Step S108 in Fig. 6 and perform control for displaying the predetermined time.

Furthermore, there is a display example conceivable in which, while the lens indicator 10 is in the hidden state, the indicator display button 24 is displayed at the position of the lens indicator 10, and when the user taps the indicator display button 24, the indicator display button 24 changes into (or is replaced with) the lens indicator 10. In this case, the display returns to the original indicator display button 24 by a predetermined operation on the lens indicator 10 or an elapse of the predetermined time. As the predetermined operation, an x button (close button) is displayed in the lens indicator 10, and operation of the x button returns the x button to the indicator display button 24. Alternatively, an operation of swiping the lens indicator 10 to an end of the screen may be the predetermined operation.

In Fig. 8, as described above, the specifying operation by the user is used as a trigger for displaying the lens indicator 10, and accordingly, the display is performed when necessary according to an intention of the user.

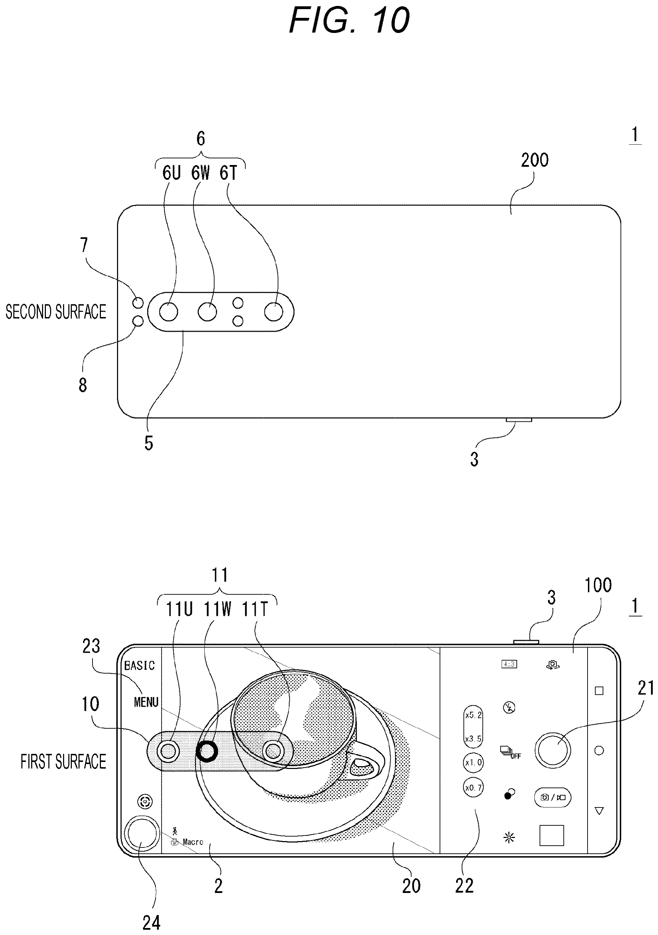

For example, as illustrated in Fig. 10, there is also a model in which the lens unit 5 is provided at a center of the second surface 200 in a short-side direction. In a case of such a model, the lens indicator 10 is displayed at a conspicuous position in the monitor region 20 on the display 2 of the first surface 100, having a high possibility of interfering with checking of the subject. In a case of such a model, it is suitable that the lens indicator 10 is displayed particularly in response to an operation of the indicator display button 24, for example, only while the indicator display button 24 is being pressed.

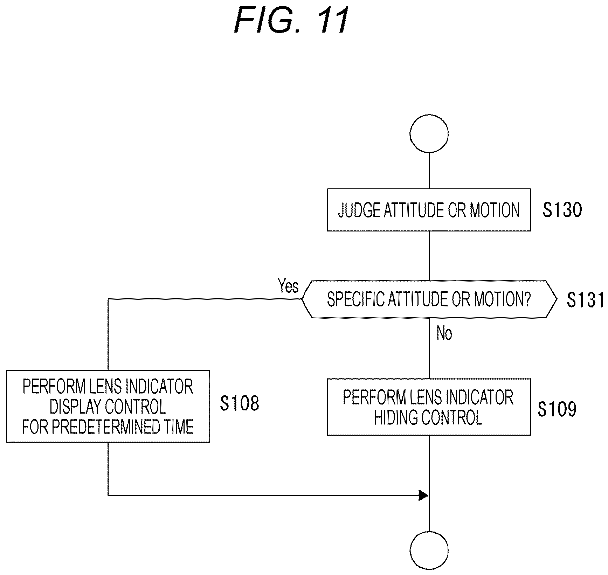

Fig. 11 is an example in which a state of an attitude or motion of the imaging apparatus 1 (smartphone) itself is used as the judgment condition.

In Step S130, the control unit 30 judges the attitude or motion of the imaging apparatus 1. For example, the control unit 30 acquires data in the IMU of the sensor unit 34 and detects the attitude or motion. Furthermore, the motion of the imaging apparatus 1 can be predicted by a change in a time axis direction for the captured image (monitor image).

Then, in Step S131, the control unit 30 judges whether or not a specific attitude has been taken or a specific motion has been made.

The specific attitude or motion is, for example, the attitude or motion of the imaging apparatus 1 in a case where the user takes a posture to shoot an image with the imaging apparatus 1.

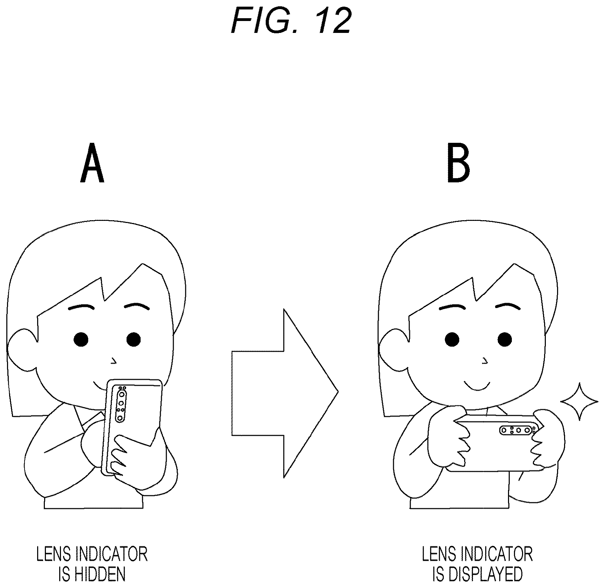

For example, Fig. 12A illustrates an example of a state of an attitude not for image shooting, and Fig. 12B illustrates an example of a state of an attitude for image shooting.

For example, in a case where the attitude in Fig. 12B or a motion leading to the attitude is detected, the control unit 30 determines that the specific attitude or motion is detected, proceeds from Step S131 to Step S108, and performs control for displaying the lens indicator 10 for the predetermined time.

Meanwhile, in a case where it is judged that the attitude or motion is not the specific attitude or motion, the control unit 30 performs in Step S109 the processing of hiding the lens indicator 10.

As a result, the lens indicator 10 can be displayed at a timing at which the user takes a posture for shooting an image, that is, at a timing when the user intends to determine the composition.

Note that another attitude or motion may be judged as the specific attitude or motion instead of the attitude or motion from the user taking a posture for image shooting. For example, it is conceivable that when the user slightly shakes the imaging apparatus 1 up and down, the lens indicator 10 is displayed taking the motion as the specific motion.

Furthermore, the display of the lens indicator 10 may be executed only when a camera shake or the like stops and the imaging apparatus 1 is in a stationary state.

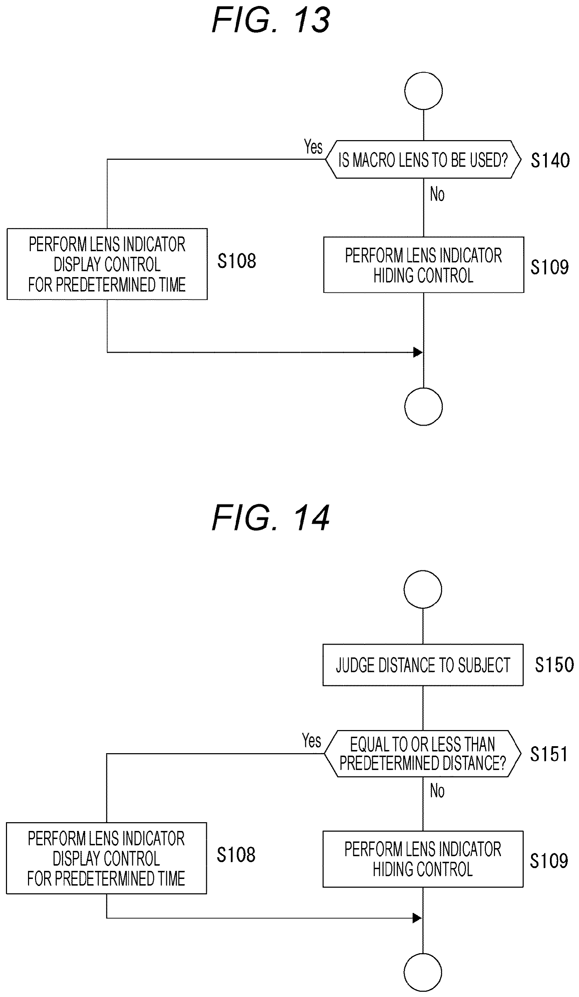

Fig. 13 illustrates an example in which use of a macro lens is used as the judgment condition.

In Step S140, the control unit 30 judges whether or not a specific lens, which is the macro lens among the plurality of lenses 6, is in a state of being used.

Then, in a case where the macro lens is in a state of being used, the control unit 30 proceeds to Step S108 and performs control for displaying the lens indicator 10 for the predetermined time.

Meanwhile, if it is not a timing at which the macro lens is in a state of being used, the control unit 30 performs in Step S109 the processing of hiding the lens indicator 10.

Note that, while the macro lens is in use, the control unit 30 may proceed to Step S110 (refer to Fig. 6), and the lens indicator 10 may continue to be displayed.

Fig. 14 illustrates an example in which a distance from the imaging apparatus 1 to the subject is used as the judgment condition.

In Step S150, the control unit 30 judges a distance from the distance measurement unit 35 to the subject. For example, the control unit 30 acquires from the distance measurement unit 35 information as a depth map, judges a main subject, and obtains information of the distance to the main subject on the basis of a position of the main subject and the depth map.

In Step S151, the control unit 30 judges whether or not the obtained distance information is equal to or less than a predetermined distance as a threshold value set in advance.

Then, if the obtained distance information is equal to or less than the predetermined distance, the control unit 30 proceeds to Step S108 and performs control for displaying the lens indicator 10 for the predetermined time.

Meanwhile, if the obtained distance information is not equal to or less than the predetermined distance, the control unit 30 performs in Step S109 the processing of hiding the lens indicator 10.

As a result, in a case where the subject is close, in particular, in a case where influence of parallax between the respective lenses 6 on the composition is large, the lens indicator 10 can be displayed.

Note that, in addition to the example of detecting the distance to the subject with the TOF sensor, there is also a method for providing so-called image plane phase difference pixels in the image sensor to measure the distance. Furthermore, there is also a method for estimating the distance with artificial intelligence (AI) processing on the basis of the captured image. Any method may be adopted.

Although an example of the judgment condition of the display/hiding of the lens indicator 10 has been described above, any combination including the judgment conditions in Fig. 6 can be adopted. The control for displaying/hiding of the lens indicator 10 can be performed according to at least one judgment condition.

Furthermore, the control for the display/hiding may be performed by using a judgment condition other than the judgment conditions exemplified. For example, it is conceivable that a type of the subject is judged, and the lens indicator 10 is displayed if the type is a specific type.

### <4. Various examples of display and operation>

Hereinafter, an example related to display of the lens indicator 10, an operation example using the lens indicator 10, and the like will be described.

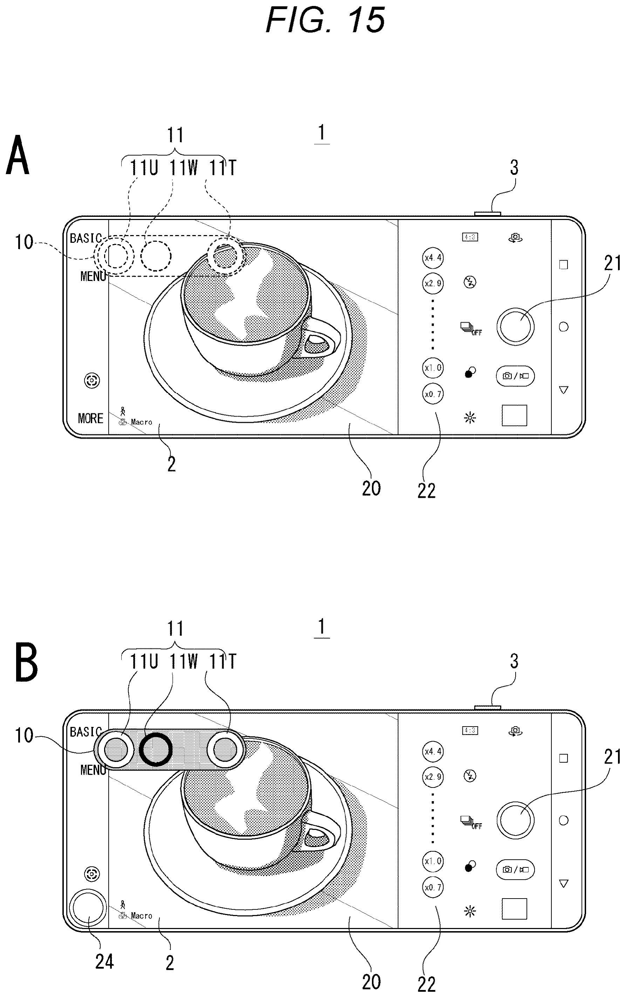

A display position of the lens indicator 10 is merely a position directly behind the lens unit 5. For example, the lens indicator 10 is displayed at a position overlapping the monitor region 20. For this reason, there is a possibility that the lens indicator 10 interferes with display. Therefore, it is conceivable that the lens indicator 10 is displayed in a state where transmittance is increased as much as possible. Fig. 15A illustrates an example in which the lens indicator 10 is faintly displayed in a state where the transmittance is increased.

For example, in a case where the lens indicator 10 is displayed at all times, a state where the transmittance is increased in this manner is desirable.

Meanwhile, Fig. 15B illustrates an example in which the lens indicator 10 is clearly displayed in a non-transmissive state. As a result, a part of display content is hidden by the lens indicator 10, but it is good for the user to check the lens position. Therefore, for example, such display is preferably performed in a case where the display is performed only in a case where the user desires. For example, it is conceivable that, when the lens indicator 10 is displayed only while the indicator display button 24 is being pressed, the lens indicator is displayed in a non-transmissive manner as illustrated in Fig. 15B.

Note that the transmittance may vary according to a case of display.

For example, in a case where the lens indicator 10 is displayed with the "ON" mode in Step S104 in the processing in Fig. 6, the display is performed in a state where the transmittance is increased as illustrated in Fig. 15A. In a case where the display is controlled for the predetermined time in Step S108 in the "AUTO" mode, it is conceivable that the display is performed with the transmittance reduced or in the non-transmissive state as illustrated in Fig. 15B.

Furthermore, the transmittance may be changed depending on a position of the subject. For example, in a case where the main subject judged by a main subject judgment overlaps the display position of the lens indicator 10, the transmittance of the lens indicator 10 is increased. This makes the lens indicator 10 less likely to interfere with the user checking the main subject.

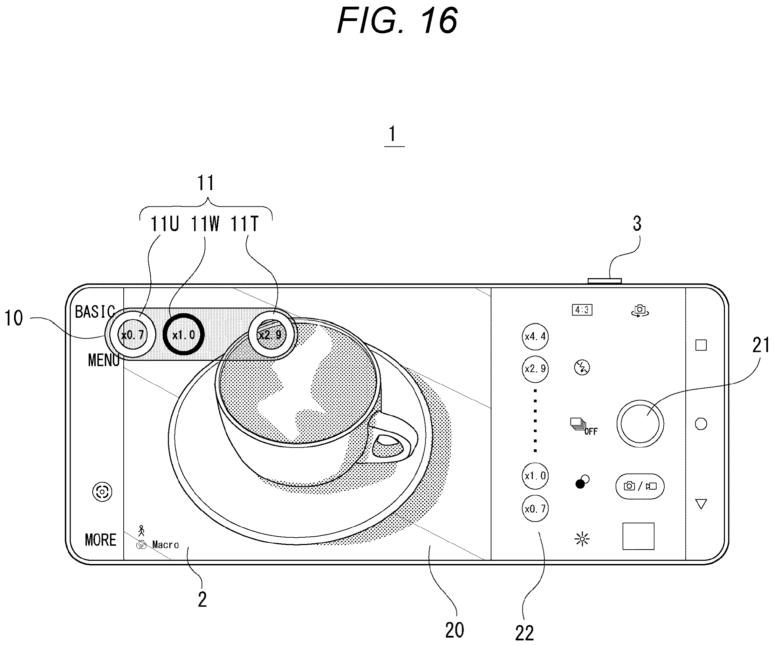

Fig. 16 illustrates an example in which magnifications of the respective lenses 6 are displayed on the position marks 11 in the lens indicator 10. For example, in a case where the lens indicator 10 is controlled to be displayed in Steps S104, S108, and S110 in Fig. 6 and the like, the control unit 30 also displays zoom magnifications of the respective lenses 6.

Furthermore, in a case where a zoom magnification is changed by operation of a zoom magnification button 22, the control unit 30 also changes a value of the magnification on a position mark 11.

As a result, the user can easily know a magnification of the lens used currently.

Note that, although "x 1.0" and the like are displayed as zoom magnifications here, focal lengths may be displayed, or the user may switch between a magnification display and a focal length display.

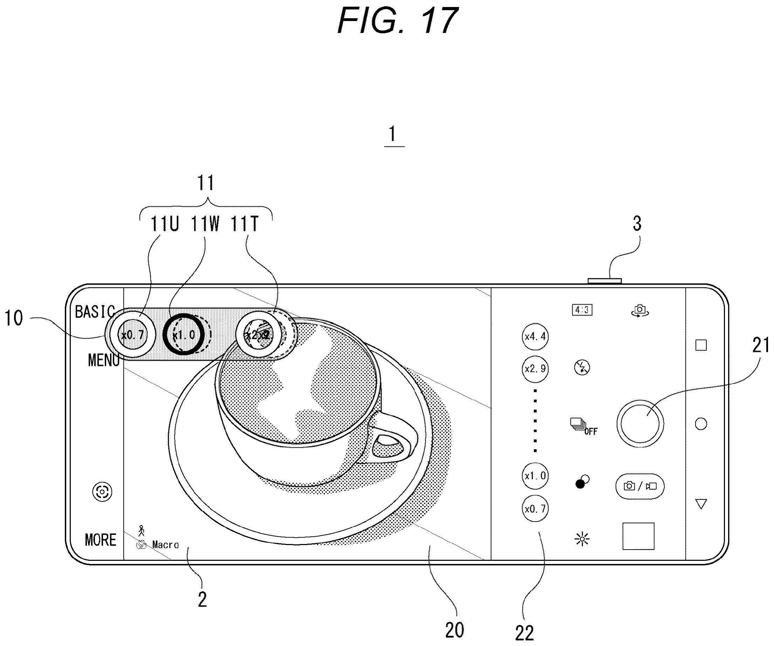

The position marks 11 in the lens indicator 10 may be used as zoom operators. Fig. 17 illustrates an example in which the position marks 11W and 11T can be laterally slid as indicated by broken lines.

For example, the user touches and slides the position mark 11T. This is a zoom operation of the telelens 6T, and the zoom magnification thereof is changed. Note that, although not illustrated, in a case where a zoom magnification is changed by the sliding, a displayed magnification value is also updated.

Animation display may be used for a slid position mark 11 to indicate that the position mark 11 returns to an original position by an end of the operation.

Furthermore, each of the position marks 11U, 11W, and 11T may be a selection operator of the corresponding lens 6 (6U, 6W, 6T).

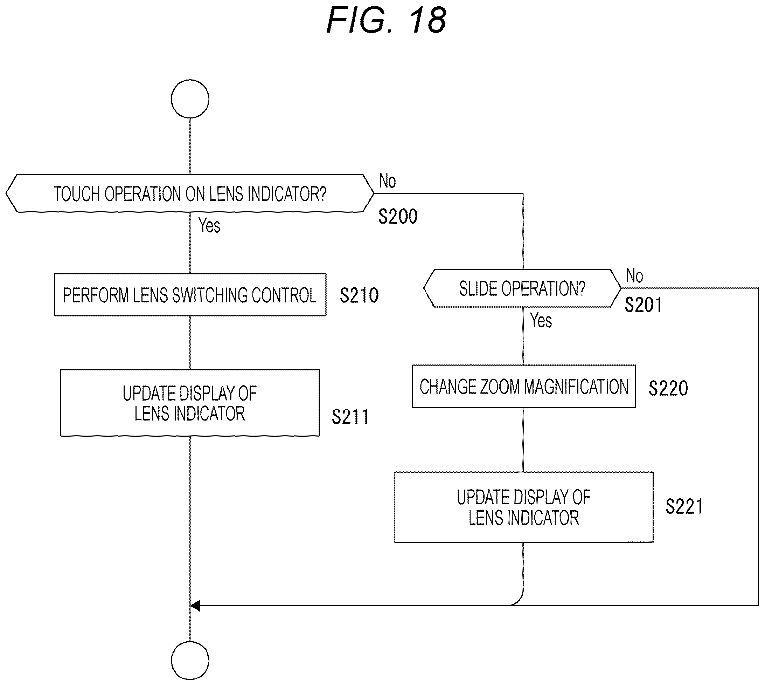

Fig. 18 illustrates a processing example of the control unit 30.

In Step S200, the control unit 30 monitors a touch operation on a position mark 11 in the lens indicator 10.

In a case where the touch operation is sensed, the control unit 30 proceeds to Step S210 and performs lens switching control. For example, in a case where the position mark 11U is touched, the ultra-wide lens 6U is controlled to be the lens to be used.

In Step S211, the control unit 30 performs processing of updating display of the lens indicator 10 according to the lens switching. For example, the position mark 11 corresponding to the lens 6 to be used newly is displayed in an emphasized manner.

In Step S201, the control unit 30 monitors whether or not a slide operation has been performed on the position mark 11.

In a case where the slide operation has been performed, the control unit 30 proceeds to Step S220 and changes the zoom magnification according to an amount of the slide. That is, the lens section 31 is instructed to execute zoom lens driving. Alternatively, the control unit 30 may change the zoom magnification with electronic zoom processing performed by the imaging signal processing unit 30a.

In Step S221, the control unit 30 performs processing of updating the display of the lens indicator 10 according to the zoom magnification change. That is, movement of the position mark 11 according to the slide operation and a change in numerical value of the magnification to be displayed are controlled.

With such processing, the lens indicator 10 can also be used as an operator for lens selection or zoom operation.

Note that, although the zoom magnification buttons 22 are left in Fig. 17, the zoom magnification buttons 22 are not necessarily displayed in a case where operations can be performed with the lens indicator 10 as described above. For example, processing may be performed to display the zoom magnification buttons 22 when the lens indicator 10 is hidden, or to remove the zoom magnification buttons 22 to widen the monitor region 20 when the lens indicator 10 is displayed.

Furthermore, examples of a case where the zoom magnification is changed include a magnification change with optical zoom by a lens system and a magnification change with electronic zoom by signal processing. It is preferable that whether or not the zoom magnification change is based on the optical zoom or the electronic zoom can be presented to the user.

Therefore, for example, at a time of the slide operation, the display mode is preferably changed such that a color of the position mark 11 is changed between the optical zoom and the electronic zoom.

This processing can also be adopted in an example in which the position marks 11 are not used as operators. For example, in the example in Fig. 16, the color of the position mark 11 is preferably changed between when it is in a magnification range of the optical zoom and when it is in a magnification range of the electronic zoom.

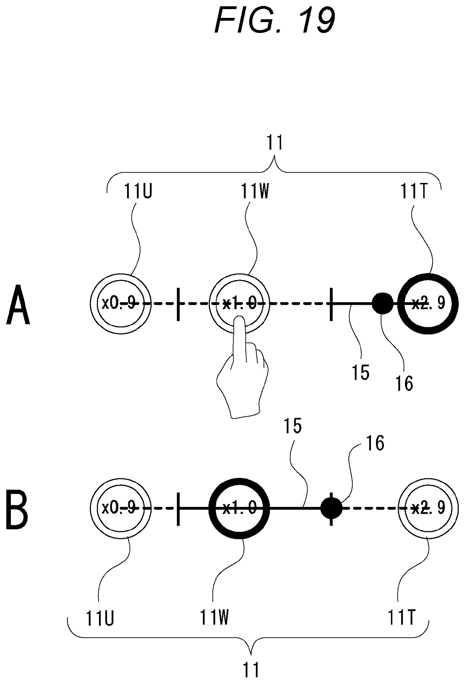

Furthermore, as the UI of the zoom magnification operation, there is an example conceivable in which a slider 15 is combined with the position marks 11 in the lens indicator 10 as illustrated in Figs. 19A and 19B. On the slider 15, a pointer 16 indicates a current position (zoom magnification).

The slider 15 represents, with a solid line, a zoom magnification range of the lens used currently, and represents, with broken lines, zoom magnification ranges of the other lenses. For example, in a case in Fig. 19A, the telelens 6T corresponding to the position mark 11T is the lens used currently, and the zoom magnification range of the telelens 6T is a solid line.

In this UI, the zoom magnification is changed by sliding the pointer 16 on the slider 15, for example.

Furthermore, for example, the zoom magnification is also changed by sliding the position mark 11T in Fig. 19A as in the example in Fig. 17 described above.

Furthermore, for example, by tapping the position mark 11W in a state as in Fig. 19A, the zoom magnification (and the lens used) is changed as illustrated in Fig. 19B. In a state as in Fig. 19B, the zoom magnification range of the wide lens 6W corresponding to the position mark 11W is represented by a solid line.

Note that, in the drawing, the zoom magnification range of the lens used is distinguished by the solid line and broken line for the slider 15. However, not limited to by the solid line and the broken line, the zoom magnification range of the lens used currently is only required to be represented by various display modes, such as different colors, for example.

Furthermore, although there is an example conceivable in which an operator that changes the zoom magnification with a slide operation, such as the slider 15 in Fig. 19, is superimposed on or displayed in vicinity of the lens indicator 10, the operator is not necessarily displayed at all times. For example, in response to the zoom magnification operation being performed as a tap, a slide, or the like on the position mark 11, the slider 15, a gauge, or the like may be displayed to present the zoom magnification or enable the slide operation.

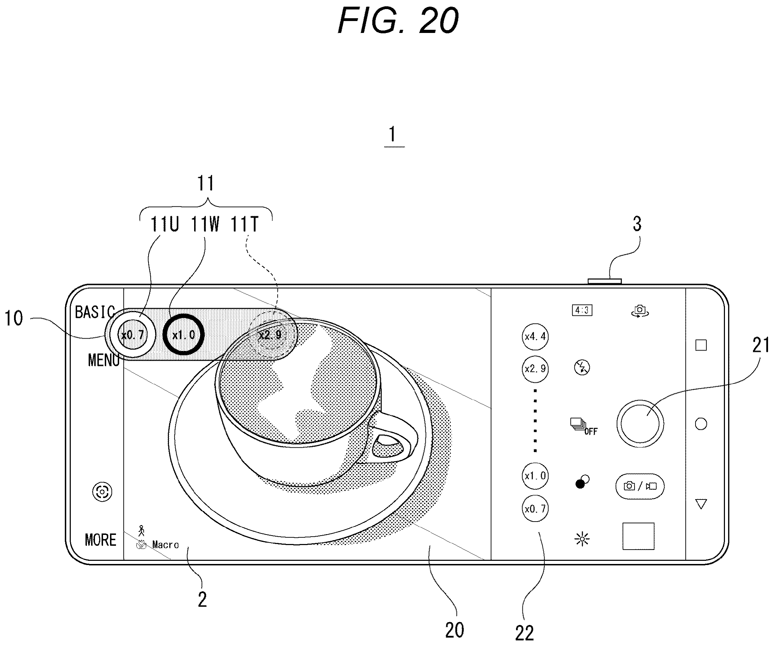

Next, Fig. 20 illustrates an example in which the display mode is changed for a lens unsupported in a current state (a lens that cannot perform appropriate image capturing). For example, Fig. 20 illustrates a state in which the position mark 11W is displayed in an emphasized manner indicating that the wide lens 6W is the lens used currently, while the position mark 11T is grayed out (represented by a broken line in the drawing). This indicates that the telelens 6T is a lens unsupported in the current situation.

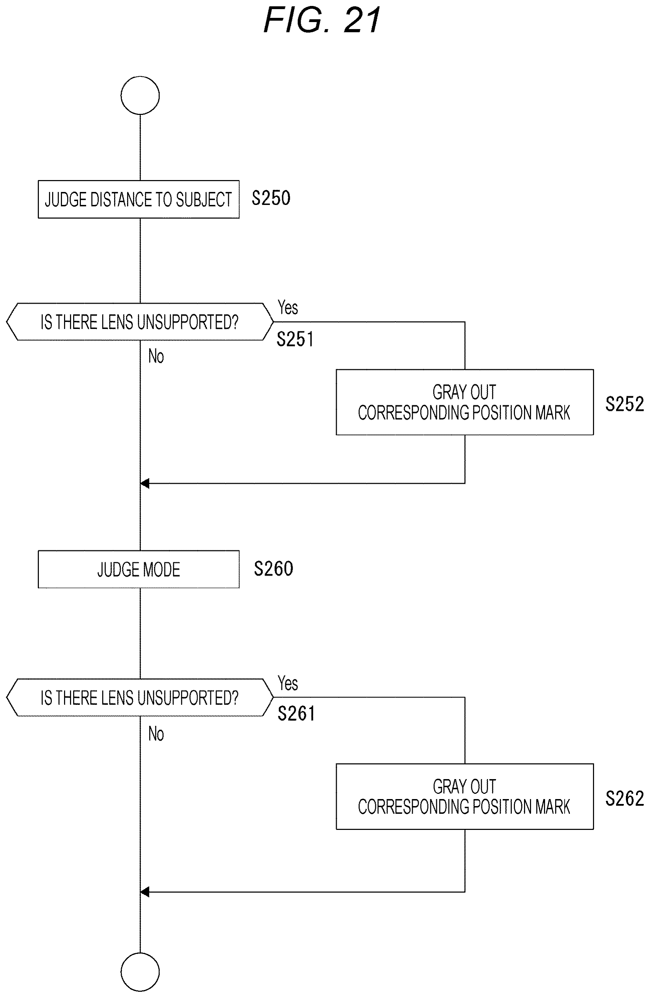

For example, the control unit 30 performs processing as illustrated in Fig. 21.

In Step S250, the control unit 30 judges the distance to the subject. The processing is similar to Step S150 in Fig. 14.

In Step S251, the control unit 30 judges whether or not there is a lens 6 unsupported in the current distance to the subject. For example, a lens that is too close in distance and is out of focus is regarded as an unsupported lens.

When there is a lens 6 unsupported for such a current subject distance, the control unit 30 performs in Step S252 control to gray out the position mark 11 corresponding to the lens 6.

In Step S260, the control unit 30 judges a current shooting mode.

In Step S261, the control unit 30 judges whether or not there is a lens 6 unsupported in the current shooting mode. For example, in a configuration in which a continuous shooting function is provided in the optical system of some lenses (and image sensors), in a case where a continuous shooting mode is selected, a lens 6 in the optical system that does not have the continuous shooting function is unsupported. Furthermore, in a configuration in which the panoramic shooting function can be performed only by some of the lenses 6, in a case where the panoramic shooting mode is set, a lens 6 in the optical system in which the panoramic shooting function is not provided is unsupported.

Thus, when there is a lens 6 unsupported in the current shooting mode, the control unit 30 performs in Step S262 control to gray out the position mark 11 corresponding to the lens 6.

As described above, as illustrated in Fig. 20, the position mark 11 corresponding to a lens 6 unsupported at a present time is grayed out or the like, and presented to the user, by which the user can recognize that the lens 6 cannot be selected.

Note that, in this case, for example, a touch operation on the grayed-out position mark 11 is preferably an invalid operation as the lens switching operation.

Fig. 21 illustrates an example in which a lens 6 unsupported is judged from a viewpoint of the distance to the subject or the shooting mode, but the lens 6 unsupported may be judged from another viewpoint, and the display mode of the position mark 11 may be changed to gray out, or the like.

For example, there is a background blurring function.

The background blurring function is a function of creating a depth map by utilizing parallax between two lenses 6 and performing blurring processing on a background region on the basis of the depth map.

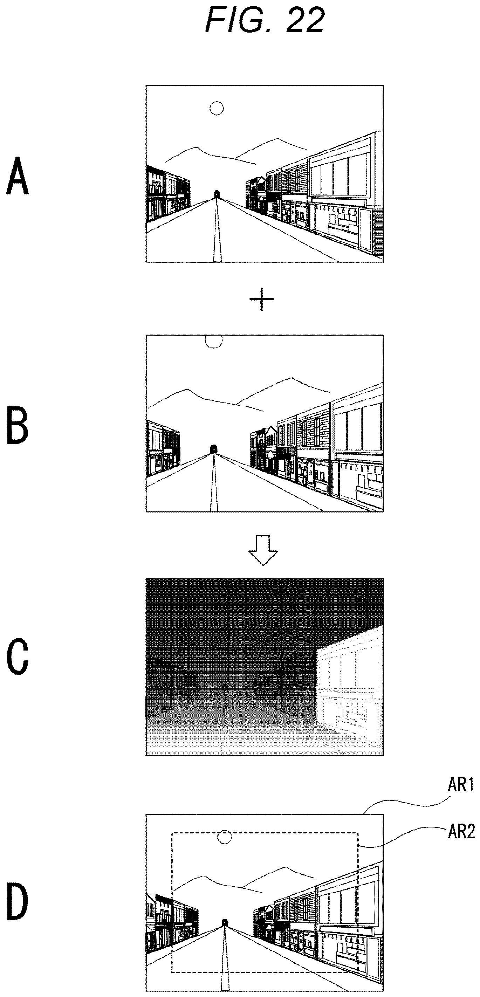

For example, Fig. 22A illustrates an image captured by the ultra-wide lens 6U, and Fig. 22B illustrates an image captured by the wide lens 6W. A depth map as illustrated in Fig. 22C is created by utilizing a disparity between the two captured images. Here, a map in which a whiter portion represents a shorter distance is used. At this time, assuming that an area AR1 in Fig. 22D is an area imaged by the ultra-wide lens 6U and an area AR2 is an area imaged by the wide lens 6W, the depth map of only the area AR2 imaged by both the lenses can be created.

Then, although the ultra-wide lens 6U is actually used, only the area captured by the wide lens 6W can be imaged as viewed from the user.

Therefore, in this case, it is conceivable to gray out the position mark 11U corresponding to the ultra-wide lens 6U.

### <5. Conclusion and modifications>

According to the above-described embodiment, the following effects can be obtained.

The imaging apparatus 1 according to the embodiment includes the display 2 provided on the first surface 100 of the housing, the lenses 6 that are for image capturing and are provided on the second surface 200 of the housing, the second surface 200 having a relationship of front and back surfaces with the first surface 100, and the control unit 30 that performs control for displaying the lens indicator 10 that indicates the lenses 6 at a position on the display 2, where the lenses 6 are projected from the second surface 200 to the first surface 100.

That is, a position of the lens 6 on the back surface is presented on the display 2. As a result, the user can recognize the position of the lens 6 on the back surface while viewing the subject image on the display 2 on the first surface 100. Therefore, it is extremely easy to handle the smartphone (imaging apparatus 1) so as to take an appropriate position state with respect to the subject.

In the embodiment, an example has been described in which the plurality of lenses 6 is mounted on the first surface 100. In this case, the control unit 30 causes the lens indicator 10 to display the positions of the plurality of lenses 6, and to execute display with which the lens used can be identified.

With the position marks 11 in the lens indicator 10 of the display 2, the user can recognize the positions of the plurality of lenses 6 on a back surface side of a surface the user is viewing. Furthermore, an emphasized display with a different mode that can be identified from other position marks 11, such as one of the position marks 11 is displayed with high luminance or in a specific color, is performed, by which the user can recognize the lens 6 currently used for image capturing. In a case of a smartphone in particular, the user often does not know which lens 6 is being used. Therefore, by recognizing the lens used, it is easy to take an appropriate position state with respect to the subject.

In the embodiment, an example has been described in which the lens indicator 10 includes information about the zoom magnifications of the lenses 6 (refer to Figs. 16, 17, 20, and the like).

As a result, the user can recognize the zoom magnification of each lens.

Furthermore, the current zoom magnification can also be recognized by clearly indicating the lens being used.

Note that focal length display may be performed instead of the zoom magnification display. Furthermore, the user may arbitrarily select the zoom magnification display or the focal length display.

In the embodiment, there has been described that the control unit 30 performs control for changing the zoom magnification display of the lens indicator 10 according to a change in the zoom magnification (refer to Figs. 16, 17, 18, and the like).

As a result, the user can recognize the zoom magnification of each lens and the zoom magnification of the lens 6 being used, and, when having changed a zoom magnification with a zoom operation, can recognize the changed zoom magnification by using the lens indicator 10.

In the embodiment, an example has been described in which the control unit 30 performs switching control of the lens to be used for image capturing, in response to sensing an operation on the lens indicator 10 by the user (refer to Fig. 18).

Because the position marks 11 in the lens indicator 10 correspond to the respective lenses 6, the user can intuitively operate the lens indicator 10 to designate a lens. That is, the lens indicator 10 (position marks 11) is also suitable for use as a lens designation operator.

In the embodiment, an example has been described in which, as the display control of the lens indicator 10, the control unit 30 performs control for displaying or hiding the lens indicator 10 according to a condition (refer to Figs. 6 to 14).

The lens indicator 10 is not displayed at all times, but is hidden or displayed according to the condition. The hiding may make the subject image in the monitor region 20 easily viewable, and the displaying may be suitable for imaging operation by the user.
Therefore, by turning on the display of the lens indicator 10 at an appropriate desired timing, comfortable operability can be provided to the user.

Note that the lens indicator 10 is displayed merely at a position corresponding to the lens position, and thus may overlap with another icon or the like displayed on the screen. Therefore, when the lens indicator 10 is displayed, control may be performed to change a display position of the overlapped icon or the like to a position at which the lens indicator 10 does not overlap with the icon or the like.

In the embodiment, an example has been described in which the control unit 30 performs control for displaying or hiding the lens indicator 10 according to the display mode of the lens indicator 10 selected by the user (refer to Fig. 6).

For example, the user can select "ON", "OFF", or "AUTO" as the lens position display mode, and control for displaying or hiding of the lens indicator 10 is performed according to the selected mode. As a result, it is possible to achieve the display of the lens indicator 10 according to a request from the user.

In the embodiment, an example has been described in which the control unit 30 performs control for displaying the lens indicator 10 according to the specifying operation by the user (refer to Fig. 8).

By displaying the lens indicator 10 in a case where the user performs, for example, the specifying operation, a function of presenting the lens indicator 10 in conjunction with the operation by the user can be implemented.

In a case where the lens indicator 10 is displayed according to the specifying operation, the display may be ended in a certain period of time, or the lens indicator 10 may continue to be displayed during the operation (or until a display cancellation operation is performed).

As an example of the specifying operation, the half-pressing operation of the shutter button 3 has been described (refer to Fig. 8).

The half-pressing of the shutter button 3 is an operation that triggers start of the autofocus. The control unit 30 causes the lens indicator 10 to be displayed in response to this, by which the lens position can be notified in a good timing when the user intends to determine the composition with respect to the subject.

Furthermore, as an example of the specifying operation, an operation that triggers execution of the autofocus has been described (refer to Fig. 8).

For example, touching a specific subject in the monitor region 20 can be an operation for instructing execution of the autofocus on the subject. Furthermore, the autofocus button or the like may be displayed as the user interface so as to be operable. The control unit 30 causes the lens indicator 10 to be displayed in response to these operations that trigger the start of the autofocus, by which the lens position can be notified in a good timing when the user intends to determine the composition with respect to the subject.

Furthermore, as an example of the specifying operation, an operation of an operator that instructs display of the lens indicator 10 has been described (refer to Figs. 8 and 9).

For example, the indicator display button 24 is prepared so as to be able to be arbitrarily operated by the user. The control unit 30 displays the lens indicator 10 in response to the operation of the indicator display button 24, by which the lens position can be presented at a timing desired by the user.

Note that the indicator display button 24 itself may be switched between the display/hiding. For example, the display/hiding of the indicator display button 24 is switched according to a shooting mode, a display mode, a distance to the subject, an attitude or motion of the housing of the imaging apparatus 1, a zoom operation, an operation of instructing execution of the autofocus, or the like. As a result, the indicator display button 24 is displayed when necessary, and the user can arbitrarily perform an operation to display the lens indicator 10.

Furthermore, as an example of the specifying operation, an operation in which a change in the zoom magnification occurs in response to an operation has been described (refer to Fig. 7).

The zoom magnification is changed by a zoom operation to a tele side or a wide side. Furthermore, the lens 6 may be switched according to this. Moreover, the zoom magnification is also changed by a lens switching operation by the user.

Therefore, the control unit 30 displays the lens indicator 10 in response to an operation, such as the zoom operation or the lens switching operation, in which a change in the zoom magnification occurs. As a result, when there is lens switching or when an angle of view fluctuates, the lens position can be notified.

In the embodiment, an example has been described in which the control unit 30 performs control for displaying the lens indicator 10 according to a judgment result of the attitude or motion of the housing of the imaging apparatus 1 (refer to Figs. 11 and 12).

For example, the control unit 30 displays the lens indicator 10 in a case where it is estimated, from information detected from the attitude or motion of the housing of the imaging apparatus 1 itself, that the user has performed a behavior of aiming at the subject. As a result, the lens indicator 10 can be displayed at a timing when the user wishes to recognize the lens position.

In the embodiment, an example has been described in which the control unit 30 performs control for displaying the lens indicator 10 in a case where a specific lens 6 among the plurality of lenses 6 is used (refer to Steps S105 and S110 in Fig. 6).

For example, in a case where the specific lens 6 is used in a macro mode, it is difficult for the user to determine the composition unless the user knows the lens position. Therefore, the control unit 30 displays the lens indicator 10 when the lens to be used in the macro mode is selected. As a result, the lens indicator 10 can be displayed at a required timing.

In the embodiment, an example has been described in which the control unit 30 performs control for displaying the lens indicator 10 according to a measurement result of the distance to the subject (refer to Fig. 14).

For example, the control unit 30 displays the lens indicator 10 in a case where the distance to the subject is equal to or less than the predetermined distance on the basis of information of the depth to the main subject detected by the distance measurement unit 35. As a result, the lens indicator 10 can be displayed at a required timing.

In the embodiment, an example has been described in which the control unit 30 performs control such that the display mode of the lens indicator 10 is different between a case where the zoom operation is performed by the optical zoom and a case where the zoom operation is performed by the electronic zoom (refer to Fig. 18).

As a result, the user can easily check whether or not the zoom operation is by the optical zoom or electronic zoom. For example, it is possible to easily recognize, for example, when the optical zoom is switched to the electronic zoom.

Such switching of the display mode can be applied to both the imaging apparatus 1 equipped with a plurality of lenses and the imaging apparatus 1 equipped with one lens.

In the embodiment, an example has been described in which the control unit 30 controls the display mode of the lens indicator 10 to be different according to the measurement result of the distance to the subject (refer to Fig. 21).

Depending on the distance to the subject, there may be an unsupported lens (a lens that cannot perform appropriate image capturing). In that case, the control unit 30 performs display control, such as graying out the position mark 11 of the unsupported lens, for example. As a result, the user can recognize the lens that cannot be selected.

Note that it is also possible to control the display mode in which the position mark 11 of a recommended lens is displayed in an emphasized manner or blinks according to the distance to the subject, to prompt the user to perform the switching operation.

Furthermore, even in the imaging apparatus 1 on which one lens is mounted, the lens indicator 10 (position mark 11) may be grayed out in a case where the distance is out of a supportable distance range.

In the embodiment, an example has been described in which the control unit 30 controls the display mode of the indicator to be different according to the shooting mode (refer to Fig. 21).

For example, there may be an unsupported lens depending on the shooting mode. In that case, the control unit 30 performs display control, such as graying out the position mark 11 of the unsupported lens, for example. As a result, the user can recognize the lens that cannot be selected in the current shooting mode.

Furthermore, in the current shooting mode, it is also possible to control the display mode in which the position mark 11 of a recommended lens is displayed in an emphasized manner or blinks, to prompt the user to perform the switching operation.

The program according to the embodiment is a program that causes the control unit 30 of the imaging apparatus 1 to execute processing, the imaging apparatus 1 including the display 2 provided on the first surface 100 of the housing and the lenses 6 that are for image capturing and are provided on the second surface 200 of the housing, the second surface 200 having a relationship of front and back surfaces with the first surface 100. For example, the program is a program for causing an information processing apparatus, such as a CPU or a DSP, or a device including the information processing apparatus, to execute the processing illustrated in Figs. 6, 7, 8, 11, 13, 14, 18, and 21.

That is, the program according to the embodiment is a program for causing the control unit 30 of the imaging apparatus 1 to execute control for displaying the lens indicator 10 indicating the lenses 6 at a position on the display 2, where the lenses 6 are projected from the second surface 200 to the first surface 100.

Such a program is included in, for example, a camera application of a smartphone, thereby implementing the functions according to the present embodiment.

Such a program can be recorded in advance in an HDD as a recording medium built in a device such as a computer apparatus, a ROM in a microcomputer having a CPU, and the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program may be installed from the removable recording medium into a personal computer and the like, or may be downloaded from a download site through a network such as a local area network (LAN) or the Internet.

Furthermore, such a program is suitable for providing the imaging apparatus 1 according to the embodiment in a wide range. By downloading the program to a mobile terminal device such as a smartphone or a tablet, an imaging apparatus, a mobile phone, a personal computer, a gaming device, or the like, for example, the smartphones or the like can function as the imaging apparatus 1 in the present disclosure.

Note that the effects described in the present specification are merely examples and are not limited, and other effects may be provided.

Note that the present technology can also adopt the following configurations.
(1) An imaging apparatus including
   a display provided on a first surface of a housing,
   a lens that is for image capturing and is provided on a second surface of the housing, the second surface having a relationship of front and back surfaces with the first surface, and
   a control unit that performs control for displaying an indicator that indicates the lens at a position on the display, where the lens is projected from the second surface to the first surface.
(2) The imaging apparatus according to (1), in which
   a plurality of the lenses is mounted on the first surface, and
   the control unit causes the indicator to display positions of a plurality of the lenses, and to execute display with which a lens used for image capturing is able to be identified.
(3) The imaging apparatus according to (1) or (2), in which
   the indicator includes information about a zoom magnification of the lens.
(4) The imaging apparatus according to any one of (1) to (3), in which
   the indicator includes information of a zoom magnification of the lens, and
   the control unit performs control for changing display of a zoom magnification of the indicator according to a change in zoom magnification.
(5) The imaging apparatus according to any one of (1) to (4), in which
   a plurality of the lenses is mounted on the first surface, and
   the control unit performs switching control of a lens to be used for image capturing, in response to sensing an operation on the indicator by a user.
(6) The imaging apparatus according to any one of (1) to (5), in which
   as display control of the indicator, the control unit performs control for displaying or hiding according to a condition.
(7) The imaging apparatus according to any one of (1) to (6), in which
   the control unit performs control for displaying or hiding the indicator according to a display mode of the indicator selected by a user.
(8) The imaging apparatus according to any one of (1) to (7), in which
   the control unit performs control for displaying the indicator according to a specifying operation by a user.
(9) The imaging apparatus according to (8), in which
   the specifying operation is a half-pressing operation of a shutter button.
(10) The imaging apparatus according to (8) or (9), in which
   the specifying operation is an operation that triggers execution of autofocus.
(11) The imaging apparatus according to any one of (8) to (10), in which
   the specifying operation is an operation of an operator that instructs display of an indicator.
(12) The imaging apparatus according to any one of (8) to (11), in which
   the specifying operation is an operation in which a change in zoom magnification occurs in response to an operation.
(13) The imaging apparatus according to any one of (1) to (12), in which
   the control unit performs control for displaying the indicator according to a judgment result of an attitude or motion of an imaging apparatus housing.
(14) The imaging apparatus according to any one of (1) to (13), in which
   a plurality of the lenses is mounted on the first surface, and
   the control unit performs control for displaying the indicator in a case where a specific lens among a plurality of the lenses is to be used.
(15) The imaging apparatus according to any one of (1) to (14), in which
   the control unit performs control for displaying the indicator according to a measurement result of a distance to a subject.
(16) The imaging apparatus according to any one of (1) to (15), in which
   the control unit performs control such that a display mode of the indicator is different between a case where a zoom operation is performed by an optical zoom and a case where the zoom operation is performed by an electronic zoom.
(17) The imaging apparatus according to any one of (1) to (16), in which
   the control unit controls a display mode of the indicator to be different according to a measurement result of a distance to a subject.
(18) The imaging apparatus according to any one of (1) to (17), in which
   the control unit controls a display mode of the indicator to be different according to a shooting mode.
(19) A display control method for displaying, as a method for controlling display of an imaging apparatus including a display provided on a first surface of a housing, and a lens that is for image capturing and is provided on a second surface of the housing, the second surface having a relationship of front and back surfaces with the first surface,
   an indicator that indicates the lens at a position on the display, where the lens is projected from the second surface to the first surface.
(20) A program that causes
   a control unit of an imaging apparatus including a display provided on a first surface of a housing, and a lens that is for image capturing and is provided on a second surface of the housing, the second surface having a relationship of front and back surfaces with the first surface to
   execute control for displaying an indicator that indicates the lens at a position on the display, where the lens is projected from the second surface to the first surface.

### REFERENCE SIGNS LIST

- 1: Imaging apparatus
- 2: Display
- 3: Shutter button
- 5: Lens unit
- 6: Lens
- 6U: Ultra-wide lens
- 6W: Wide lens
- 6T: Telelens
- 7: Photometry unit
- 8: Flash unit
- 9: TOF sensor
- 10: Lens indicator
- 11, 11U, 11W, 11T: Position mark
- 20: Monitor region
- 22: Zoom magnification
- 23: Menu button
- 24: Indicator display button
- 30: Control unit
- 30b: UI processing unit
- 30c: Calculation/judgment unit
- 31: Lens section
- 32: Display unit
- 33: Operation unit
- 34: Sensor unit
- 35: Distance measurement unit
- 100: First surface
- 200: Second surface

## Claims

1. An imaging apparatus comprising:
a display provided on a first surface of a housing;
a lens that is for image capturing and is provided on a second surface of the housing, the second surface having a relationship of front and back surfaces with the first surface; and
a control unit that performs control for displaying an indicator that indicates the lens at a position on the display, where the lens is projected from the second surface to the first surface.

2. The imaging apparatus according to claim 1, wherein
a plurality of the lenses is mounted on the first surface, and
the control unit causes the indicator to display positions of a plurality of the lenses, and to execute display with which a lens used for image capturing is able to be identified.

3. The imaging apparatus according to claim 1, wherein
the indicator includes information about a zoom magnification of the lens.

4. The imaging apparatus according to claim 1, wherein
the indicator includes information of a zoom magnification of the lens, and
the control unit performs control for changing display of a zoom magnification of the indicator according to a change in zoom magnification.

5. The imaging apparatus according to claim 1, wherein
a plurality of the lenses is mounted on the first surface, and
the control unit performs switching control of a lens to be used for image capturing, in response to sensing an operation on the indicator by a user.

6. The imaging apparatus according to claim 1, wherein
as display control of the indicator, the control unit performs control for displaying or hiding according to a condition.

7. The imaging apparatus according to claim 1, wherein
the control unit performs control for displaying or hiding the indicator according to a display mode of the indicator selected by a user.

8. The imaging apparatus according to claim 1, wherein
the control unit performs control for displaying the indicator according to a specifying operation by a user.

9. The imaging apparatus according to claim 8, wherein
the specifying operation is a half-pressing operation of a shutter button.

10. The imaging apparatus according to claim 8, wherein
the specifying operation is an operation that triggers execution of autofocus.

11. The imaging apparatus according to claim 8, wherein
the specifying operation is an operation of an operator that instructs display of an indicator.

12. The imaging apparatus according to claim 8, wherein
the specifying operation is an operation in which a change in zoom magnification occurs in response to an operation.

13. The imaging apparatus according to claim 1, wherein the control unit performs control for displaying the indicator according to a judgment result of an attitude or motion of an imaging apparatus housing.

14. The imaging apparatus according to claim 1, wherein
a plurality of the lenses is mounted on the first surface, and
the control unit performs control for displaying the indicator in a case where a specific lens among a plurality of the lenses is to be used.

15. The imaging apparatus according to claim 1, wherein
the control unit performs control for displaying the indicator according to a measurement result of a distance to a subject.

16. The imaging apparatus according to claim 1, wherein
the control unit performs control such that a display mode of the indicator is different between a case where a zoom operation is performed by an optical zoom and a case where the zoom operation is performed by an electronic zoom.

17. The imaging apparatus according to claim 1, wherein
the control unit controls a display mode of the indicator to be different according to a measurement result of a distance to a subject.

18. The imaging apparatus according to claim 1, wherein
the control unit controls a display mode of the indicator to be different according to a shooting mode.

19. A display control method for displaying, as a method for controlling display of an imaging apparatus including a display provided on a first surface of a housing, and a lens that is for image capturing and is provided on a second surface of the housing, the second surface having a relationship of front and back surfaces with the first surface,
an indicator that indicates the lens at a position on the display, where the lens is projected from the second surface to the first surface.

20. A program that causes
a control unit of an imaging apparatus including a display provided on a first surface of a housing, and a lens that is for image capturing and is provided on a second surface of the housing, the second surface having a relationship of front and back surfaces with the first surface to
execute control for displaying an indicator that indicates the lens at a position on the display, where the lens is projected from the second surface to the first surface.
